# EUROPÄISCHE PATENTSCHRIFT

(11) **EP 1 993 862 B1**
(45) Veröffentlichungstag und Bekanntmachung des Hinweises auf die Patenterteilung: **18.07.2018**
(21) Anmeldenummer: 06819914.0
(22) Anmeldetag: 06.12.2006
(51) Int. Cl.: B60G 17/052, B61F 5/10

(54) **ELEKTRONISCHE LUFTFEDERSTEUERUNG ZUR REDUKTION DES LUFTVERBRAUCHES UND ZUR SCHNELLEN AUSREGELUNG DES SOLLNIVEAUS**
ELECTRONIC PNEUMATIC SPRING CONTROLLER FOR REDUCING AIR CONSUMPTION AND RAPIDLY ADJUSTING THE SET POINT LEVEL
COMMANDE ÉLECTRONIQUE DE RESSORTS PNEUMATIQUES POUR LA RÉDUCTION DE LA CONSOMMATION D'AIR ET LA RÉGULATION RAPIDE DU NIVEAU DE CONSIGNE

(30) Priorität: 13.03.2006 AT 4072006
(43) Veröffentlichungstag der Anmeldung: 26.11.2008
(73) Patentinhaber: Siemens AG Österreich, 1210 Wien (AT)
(72) Erfinder: KITZMÜLLER, Christian, A-8010 Graz (AT); SIX, Klaus, A-8503 Stainztal (AT); TEICHMANN, Martin, A-8045 Graz (AT); WALTENSDORFER, Herwig, A-8010 Graz (AT); WEILGUNI, Gerhard, A-8051 Graz (AT)
(74) Vertreter: Maier, Daniel Oliver
(86) Internationale Anmeldenummer: PCT/EP2006/069382
(87) Internationale Veröffentlichungsnummer: WO 2007/104370

(56) Entgegenhaltungen:
- EP-A1- 0 592 388
- AU-B2- 558 363
- DE-A1- 3 510 454
- DE-A1-102005 024 190
- DE-C1- 19 544 622

## Beschreibung

Die Erfindung betrifft ein Schienenfahrzeug mit zumindest einer Luftfeder zur Abstützung eines Wagenkastens, wobei in zumindest einer Luftzu-/Abfuhrleitung der zumindest einen Luftfeder zumindest ein mechanisch betätigbares Ventil zur Steuerung des Luftaustauschs der zumindest einen Luftfeder angeordnet ist. Ein solches Schienenfahrzeug ist von der EP 0 592 388 A1 bekannt. Bei Schienenfahrzeugen der eingangs genannten Art kommen üblicherweise mechanische Ventile zum Einsatz, die über ein an dem Unterbau des Schienenfahrzeuges angeordnetes Gestänge betätigt werden können. Hierbei erfolgt ein Öffnen bzw. Schließen des Ventils in Abhängigkeit von dem Höhenunterschied zwischen dem Ventil und einem unteren Befestigungspunkt des Gestänges an dem Unterbau. Zu den wesentlichen Aufgaben mechanischer Luftfederventile gehört neben einem möglichst schnellen Ausregeln der durch Beladungsänderungen in Stationen hervorgerufenen Sekundärfederwege auch ein möglichst geringer dynamischer Luftverbrauch auf der Strecke. Durch diese Anforderungen entsteht ein Auslegungskonflikt, zu dessen Lösung gemäß dem Stand der Technik Ventile mit speziellen Ventilkennlinien eingesetzt werden. Dabei weist das Ventil typischerweise drei Ventilquerschnitte auf. Bei großen Sollniveauabweichungen öffnet sich das Ventil ganz und das System wird schnell in die Nähe des Sollniveaus hingeregelt. Bei mittleren Sollniveauabweichungen nimmt der Ventilquerschnitt eine Zwischenstellung ein und bei kleinen Sollniveauabweichungen ist das Ventil überhaupt geschlossen.

Die Lösung gemäß dem Stand der Technik hat unter anderem den Nachteil, dass bei einer Fahrt auf der Strecke, z. B. in Bögen mitunter das mechanische Ventil voll geöffnet sein kann, was einen entsprechenden Luftverbrauch nach sich zieht.

Es ist daher eine Aufgabe der Erfindung, die oben genannten Nachteile zu überwinden.

Diese Aufgabe wird mit einem Schienenfahrzeug nach Anspruch 1 gelöst. Durch die erfindungsgemäße Lösung ist es möglich, die Luftströmung in der Luftaustauschleitung zwischen dem mechanischen Ventil und der Luftfeder zu unterbrechen, wodurch sich der eingangs genannte Auslegungskonflikt überwinden lässt. So kann bei einer Fahrt auf der Strecke das Schaltmittel geschlossen werden, wodurch der dynamische Luftverbrauch im Wesentlichen auf Null reduziert wird. Weiters können aufgrund der erfindungsgemäßen Lösung auch mechanische Ventile mit einem wesentlich größeren Querschnitt verwendet werden, wodurch sich die Ausregelungsgeschwindigkeit des Sollniveaus erhöhen lässt.

Bevorzugterweise sind das zumindest eine zwischen dem zumindest einen Ventil und der zumindest einen Luftfeder angeordnete Schaltmittel oder das zumindest eine zwischen dem zumindest einen Ventil und der zumindest einen Druckquelle angeordnete Schaltmittel sowie das zumindest eine weitere Schaltmittel elektrisch und/oder elektronisch steuerbar.

Weiters können das zumindest eine zwischen dem zumindest einen Ventil und der zumindest einen Luftfeder angeordnete Schaltmittel oder das zumindest eine zwischen dem zumindest einen Ventil und der zumindest einen Druckquelle angeordnete Schaltmittel sowie das zumindest eine weitere Schaltmittel durch ein Türöffnungssignal schaltbar sein.

Auch kann vorgesehen sein, dass das zumindest eine zwischen dem zumindest einen Ventil und der zumindest einen Luftfeder angeordnete Schaltmittel oder das zumindest eine zwischen dem zumindest einen Ventil und der zumindest einen Druckquelle angeordnete Schaltmittel sowie das zumindest eine weitere Schaltmittel durch ein bei Über- oder Unterschreiten einer Grenzfahrgeschwindigkeit des Schienenfahrzeuges erzeugten Signal schaltbar ist bzw. sind.

Aus Sicherheitsgründen kann ein Endschalter vorgesehen sein, der das zumindest eine zwischen dem zumindest einen Ventil und der zumindest einen Luftfeder angeordnete Schaltmittel oder das zwischen dem zumindest einen Ventil und der zumindest einen Druckquelle angeordnete Schaltmittel sowie das zumindest eine weitere Schaltmittel vor Erreichen einer oberen oder unteren Extremlage des Fahrzeugniveaus stromlos schaltet.

Um bei einem geschlossenen Schaltmittel unzulässig große Federwege, wie sie z. B. durch ein Leck entstehen können, zu erkennen und das Schaltventil zur Nachspeisung von Luft zu öffnen bzw. eine Diagnosemeldung abzugeben, kann zumindest ein Sensor zur Überwachung von Extremlagen der Luftfeder und/ oder des zumindest einen mechanisch betätigbaren Ventils vorgesehen sein, der mit dem zumindest einem zwischen dem zumindest einen Ventil und der zumindest einen Luftfeder angeordneten Schaltmittel oder dem zwischen dem zumindest einen Ventil und der zumindest einen Druckquelle angeordneten Schaltmittel und dem zumindest einen weiteren Schaltmittel elektronisch verbunden ist, wobei das Schaltmittel bzw. die Schaltmittel vor Erreichen einer oberen oder unteren Extremlage des Fahrzeugniveaus stromlos geschaltet ist bzw. sind.

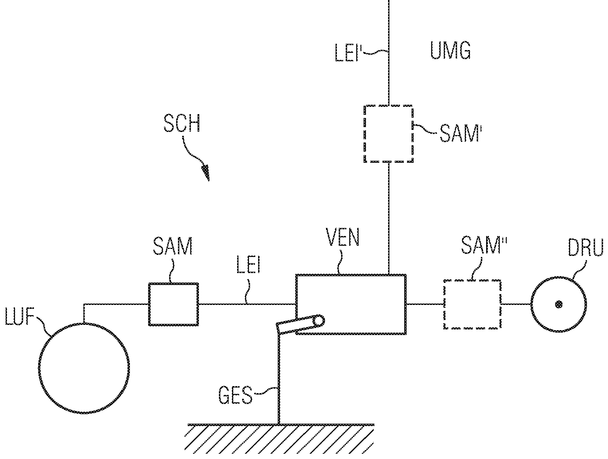

Die Erfindung samt weiteren Vorteilen wird im Folgenden anhand einiger nicht einschränkender Ausführungsbeispiele näher erläutert, welche in der Zeichnung dargestellt sind. Die einzige Figur zeigt in schematischer Form ein erfindungsgemäßes Schienenfahrzeug.

Wie in der Figur dargestellt, weist ein erfindungsgemäßes Schienenfahrzeug eine oder mehrere Luftfedern LUF auf, die eine Sekundärfeder zum Abstützen eines Wagenkastens bildet. In mindestens einer Luftzu-/Abfuhrleitung LEI zwischen einer Druckquelle DRU und der Luftfeder LUF bzw. der Luftfeder LUF und einer Umgebung UMG ist mindestens ein mechanisch betätigbares Ventil VEN zur Steuerung des Luftaustauschs angeordnet. Das mechanische Ventil VEN ist über ein an einem Unterbau des Schienenfahrzeugs SCH angeordnetes Gestänge GES betätigbar. Sinkt das Schienenfahrzeug infolge einer Beladung ab, so wird das Ventil VEN durch das Gestänge GES zu der Druckquelle DRU hin geöffnet, wodurch es zu einem Einströmen von Luft von der Druckquelle DRU in die Luftfeder LUF kommt. Bei einem Ausfedern der Luftfeder LUF über eine Sollstellung hinaus wird die Luftfeder LUF über das Ventil VEN zur Umgebung UMG hin entlüftet.

Gemäß einer ersten Variante der Erfindung ist nur zwischen dem mechanischen Ventil VEN und der Luftfeder LUF in der Luftzu-/Abfuhrleitung LEI zumindest ein Schaltmittel SAM, zur Steuerung des Luftaustausches angeordnet.

Alternativ zu dem zwischen dem Ventil VEN und der Luftfeder LUF angeordneten Schaltmittel SAM kann zwischen dem Ventil VEN und der Druckquelle DRU ein Schaltmittel SAM" vorgesehen sein, welches mit einem weiteren Schaltmittel SAM' zusammenwirkt. Das Schaltmittel SAM' ist hierbei in einer das Ventil VEN mit der Umgebung UMG verbindenden Leitung LEI' angeordnet.

Das Schaltmittel SAM bzw. die Schaltmittel SAM', SAM" kann bzw. können beispielsweise als Ventil oder als Absperrventil ausgebildet sein.

Weiters können das Schaltmittel SAM bzw. die Schaltmittel SAM', SAM" elektronisch oder elektrisch steuerbar sein und über je einen hier nicht dargestellten Motor betrieben werden. Dieser Motor kann beispielsweise bei einer Ausbildung des Schaltmittels SAM bzw. der Schaltmittel SAM', SAM" als Drosselventil bzw. als Drosselventile die Position eines Ventilstößels und damit den Durchfluss durch das zugehörige Schaltmittel SAM, SAM', SAM" ändern. Bei einer Ausbildung des Schaltmittels SAM bzw. der der Schaltmittel SAM', SAM" als Absperrventil bzw. Absperrventile kann mittels des Motors die Luftzufuhr-/ Abfuhrleitung LEI bzw. LEI' vollständig geöffnet oder geschlossen werden. Der Motor kann direkt auf das Oberteil des zugehörigen Schaltmittels SAM, SAM', SAM" montiert werden. In einer einfachen Ausführungsform der Erfindung kann die Ansteuerung des zugehörigen Schaltmittels SAM, SAM', SAM" beispielsweise über 2 elektrische Anschlüsse, die den Motor direkt antreiben, erfolgen. Wird ein AUF-Anschluss angesteuert, wird das Ventil SAM, SAM', SAM" durch den Motor auf gefahren. Mit einem ZU-Anschluss wird das Ventil SAM, SAM', SAM" mit dem Motor zu gefahren.

Gemäß einer weiteren Variante der Erfindung kann die Ansteuerung des Schaltmittels SAM bzw. der Schaltmittel SAM' "SAM" auch über ein analoges Stellsignal erfolgen. Dabei entspricht der analoge Wert der Spannung, die angelegt wird der jeweiligen Öffnung des Schaltmittels SAM, SAM', SAM". Die Öffnung des Schaltmittels SAM, SAM', SAM" kann in diesem Fall stufenlos erfolgen. Die Umsetzung des analogen Signals im Schaltmittel SAM, SAM', SAM" in die exakte Stellung erfolgt ebenfalls durch einen Motor. Dieser kann wiederum durch eine integrierte Elektronik angesteuert werden. Wird ein Ventil als Schaltmittel SAM, SAM', SAM" verwendet, so lässt sich der Luftaustausch auch auf sehr einfache Weise drosseln. Als Schaltmittel SAM, SAM', SAM" eignet sich hierfür beispielsweise ein Magnet-oder Proportionalventil besonders gut.

Bevorzugterweise wird das Schaltmittel SAM, SAM', SAM" durch ein Türöffnungssignal angesteuert. So kann bzw. können bei Stillstand des Schienenfahrzeuges und nach Erhalt des Türöffnungssignals das Schaltmittel SAM bzw. die Schaltmittel SAM' und SAM" geöffnet werden. Nach Anfahren des Schienenfahrzeuges wird üblicherweise ein weiteres Signal generiert, wenn das Fahrzeug eine Grenzgeschwindigkeit überschreitet. Dieses Signal kann beispielsweise zum Schließen des Schaltmittels SAM bzw. der Schaltmittel SAM' und SAM" verwendet werden Diese Signale zeichnen sich durch eine besondere Zuverlässigkeit aus, wodurch ein sehr sicherer Betrieb der Luftaustausch erzielt werden kann. Auch während der Fahrt kann bei Über- bzw. Unterschreiten der Grenzfahrgeschwindigkeit das Schaltmittel SAM bzw. die Schaltmittel SAM' und SAM" entsprechend betätigt werden, um den Luftaustausch gemäß vorgegebenen Betriebszuständen zu steuern. Somit kann der Luftaustausch durch die erfindungsgemäße Verwendung des Schaltmittels SAM bzw. der Schaltmittel SAM' und SAM" in verschiedenen Modi betrieben werden.

Aus Sicherheitsgründen kann das Schaltmittel SAM bzw. die Schaltmittel SAM' und SAM" im stromlosen Zustand geöffnet sein, sodass sich z. B. bei unterbrochenen Versorgungskabeln das System immer wie ein herkömmliches System verhält. Dies lässt sich beispielsweise durch die Verwendung von stromlos geöffneten Ventilen als Schaltmittel SAM, SAM', SAM"erreichen. Zusätzlich kann mit Hilfe eines Endschalters bzw. mittels Sensoren sichergestellt werden, dass vor Erreichen einer Abhebesicherung oder einer Notfeder das Schaltmittel SAM bzw. die Schaltmittel SAM' SAM" stromlos und damit geöffnet ist bzw. sind und sich das System wiederum wie ein herkömmliches System verhält. Bei Betätigen des Endschalters bzw. mithilfe der Sensoren kann auch ein Diagnosesignal generiert werden, welches eine Erkennung einer Extremlage des Fahrzeugniveaus ermöglicht.

## Patentansprüche

1. Schienenfahrzeug (SCH) mit zumindest einer Luftfeder (LUF) zur Abstützung eines Wagenkastens, wobei in zumindest einer Luftzu-/Abfuhrleitung (LEI) der zumindest einen Luftfeder (LUF) zumindest ein mechanisch betätigbares Ventil (VEN) zur Steuerung des Luftaustauschs der zumindest einen Luftfeder (LUF) angeordnet ist, **dadurch gekennzeichnet, dass** in der zumindest einen Luftzu-/ Abfuhrleitung (LEI) zwischen dem zumindest einen mechanischen Ventil (VEN) und der zumindest einen Luftfeder (LUF) zumindest ein steuerbares Schaltmittel (SAM) zur Steuerung des Luftaustauschs in der Weise angeordnet ist, dass der Luftaustausch drosselbar ist, **oder dass** zwischen dem zumindest einen mechanischen Ventil (VEN) und zumindest einer Druckquelle (DRU) zumindest ein steuerbares Schaltmittel (SAM") und in einer das zumindest eine mechanische Ventil (VEN) mit einer Umgebung (UMG) verbindenden Leitung (LEI') zumindest ein weiteres steuerbares Schaltmittel (SAM') zur Steuerung des Luftaustauschs in der Weise angeordnet sind, dass der Luftaustausch drosselbar ist.

2. Schienenfahrzeug nach Anspruch 1, **dadurch gekennzeichnet, dass** das zumindest eine zwischen dem zumindest einen Ventil (VEN) und der zumindest einen Luftfeder (LUF) angeordnete steuerbare Schaltmittel (SAM) oder das zumindest eine zwischen dem zumindest einen Ventil (VEN) und der zumindest einen Druckquelle (DRU) angeordnete steuerbare Schaltmittel (SAM") sowie das zumindest eine weitere steuerbare Schaltmittel (SAM')) elektrisch und/ oder elektronisch steuerbar ist bzw. sind.

3. Schienenfahrzeug nach Anspruch 2, **dadurch gekennzeichnet, dass** das zumindest eine zwischen dem zumindest einen Ventil (VEN) und der zumindest einen Luftfeder (LUF) angeordnete steuerbare Schaltmittel (SAM) oder das zumindest eine zwischen dem zumindest einen Ventil (VEN) und der zumindest einen Druckquelle (DRU) angeordnete steuerbare
Schaltmittel (SAM") sowie das zumindest eine weitere steuerbare Schaltmittel (SAM') durch ein Türöffnungssignal schaltbar ist.

4. Schienenfahrzeug nach einem der Ansprüche 1 bis 3, **dadurch gekennzeichnet, dass** das zumindest eine zwischen dem zumindest einen Ventil (VEN) und der zumindest einen Luftfeder (LUF) angeordnete steuerbare Schaltmittel (SAM) oder das zumindest eine zwischen dem zumindest einen Ventil (VEN) und der zumindest einen Druckquelle (DRU) angeordnete steuerbare Schaltmittel (SAM") sowie das zumindest eine weitere steuerbare Schaltmittel (SAM')durch ein bei Über- oder Unterschreiten einer Grenzfahrgeschwindigkeit des Schienenfahrzeuges (SCH) erzeugten Signal schaltbar ist bzw. sind.

5. Schienenfahrzeug nach einem der Ansprüche 1 bis 4, **dadurch gekennzeichnet, dass** ein Endschalter vorgesehen ist, der das zumindest eine zwischen dem zumindest einen Ventil (VEN) und der zumindest einen Luftfeder (LUF) angeordnete steuerbare Schaltmittel (SAM) oder das zwischen dem zumindest einen Ventil (VEN) und der zumindest einen Druckquelle (DRU) angeordnete steuerbare Schaltmittel (SAM") sowie das zumindest eine weitere steuerbare Schaltmittel (SAM') vor Erreichen einer oberen oder unteren Extremlage des Fahrzeugniveaus stromlos schaltet.

6. Schienenfahrzeug nach einem der Ansprüche 1 bis 5, **dadurch gekennzeichnet, dass** zumindest ein Sensor zur Überwachung von Extremlagen der Luftfeder (LUF) und/oder des zumindest einen mechanisch betätigbaren Ventils (VEN) vorgesehen ist, der mit dem zumindest einem zwischen dem zumindest einen Ventil (VEN) und der zumindest einen Luftfeder (LUF) angeordneten steuerbaren Schaltmittel (SAM) oder dem zwischen dem zumindest einen Ventil (VEN) und der zumindest einen Druckquelle (DRU) angeordneten steuerbaren Schaltmittel (SAM") und dem zumindest einen weiteren Schaltmittel (SAM') elektronisch verbunden ist, wobei das steuerbare Schaltmittel (SAM) bzw. die steuerbaren Schaltmittel (SAM', SAM") vor Erreichen einer oberen oder unteren Extremlage des Fahrzeugniveaus stromlos geschaltet ist bzw. sind.

## Claims

1. Rail vehicle (SCH) having at least one pneumatic spring (LUF) for supporting a railcar body, wherein at least one mechanically actuatable valve (VEN) is disposed in at least one air supply/discharge line (LEI) of the at least one pneumatic spring (LUF) for the purpose of controlling the air exchange of the at least one pneumatic spring (LUF), **characterised in that** at least one controllable switching means (SAM) is provided in the at least one air supply/discharge line (LEI) between the at least one mechanical valve (VEN) and the at least one pneumatic spring (LUF) for the purpose of controlling the air exchange in such a manner that the air exchange can be throttled, **or that** at least one controllable switching means (SAM") is disposed between the at least one mechanical valve (VEN) and at least one pressure source (DRU) and at least one further controllable switching means (SAM') is disposed in a line (LEI') connecting the at least one mechanical valve (VEN) to an environment (UMG) for the purpose of controlling the air exchange in such a manner that the air exchange can be throttled.

2. Rail vehicle according to claim 1, **characterised in that** the at least one controllable switching means (SAM) disposed between the at least one valve (VEN) and the at least one pneumatic spring (LUF) or the at least one controllable switching means (SAM") disposed between the at least one valve (VEN) and the at least one pressure source (DRU) as well as the at least one further controllable switching means (SAM') can be controlled electrically and/or electronically.

3. Rail vehicle according to claim 2, **characterised in that** the at least one controllable switching means (SAM) disposed between the at least one valve (VEN) and the at least one pneumatic spring (LUF) or the at least one controllable switching means (SAM") disposed between the at least one valve (VEN) and the at least one pressure source (DRU) as well as the at least one further controllable switching means (SAM') can be switched by means of a door opening signal.

4. Rail vehicle according to one of claims 1 to 3, **characterised in that** the at least one controllable switching means (SAM) disposed between the at least one valve (VEN) and the at least one pneumatic spring (LUF) or the at least one controllable switching means (SAM") disposed between the at least one valve (VEN) and the at least one pressure source (DRU) as well as the at least one further controllable switching means (SAM') can be switched by means of a signal that is generated if the rail vehicle (SCH) exceeds or falls below a limit running speed.

5. Rail vehicle according to one of claims 1 to 4, **characterised in that** a limit switch is provided which shuts off the power to the at least one controllable switching means (SAM) disposed between the at least one valve (VEN) and the at least one pneumatic spring (LUF) or the controllable switching means (SAM") disposed between the at least one valve (VEN) and the at least one pressure source (DRU) as well as the at least one further controllable switching means (SAM') before an upper or lower extreme position of the vehicle level is reached.

6. Rail vehicle according to one of claims 1 to 5, **characterised in that** at least one sensor is provided for monitoring extreme positions of the pneumatic spring (LUF) and/or of the at least one mechanically actuatable valve (VEN), which sensor is electronically connected to the at least one controllable switching means (SAM) disposed between the at least one valve (VEN) and the at least one pneumatic spring (LUF) or to the controllable switching means (SAM") disposed between the at least one valve (VEN) and the at least one pressure source (DRU) and the at least one further switching means (SAM'), the power to the controllable switching means (SAM) or the controllable switching means (SAM', SAM") being shut off before an upper or lower extreme position of the vehicle level is reached.

## Revendications

1. Véhicule ferroviaire (SCH) comprenant au moins un amortisseur pneumatique (LUF) pour le support d'une caisse de wagon, dans lequel, dans au moins un conduit d'amenée/évacuation de l'air (LEI) dudit au moins un amortisseur pneumatique (LEI), est disposée au moins une soupape (VEN) qui peut être activée par voie mécanique pour la commande de l'échange d'air dudit au moins un amortisseur pneumatique (LUF), **caractérisé en ce que**, dans ledit au moins un conduit d'amenée/évacuation de l'air (LEI), entre ladite au moins une soupape mécanique (VEN) et ledit au moins un amortisseur pneumatique (LUF), est disposé au moins un moyen de commutation (SAM) qui peut être commandé pour la commande de l'échange d'air, d'une manière telle que l'échange d'air peut faire l'objet d'un étranglement, ou **en ce que**, entre ladite au moins une soupape mécanique (VEN) et au moins une source de pression (DRU), est disposé au moins un moyen de commutation supplémentaire(SAM") qui peut être commandé, et dans un conduit (LEI') reliant ladite au moins une soupape mécanique (VEN) à un environnement (UMG), est disposé au moins un moyen de commutation supplémentaire (SAM') qui peut être commandé pour la commande de l'échange d'air, d'une manière telle que l'échange d'air peut faire l'objet d'un étranglement.

2. Véhicule ferroviaire selon la revendication 1, **caractérisé en ce que** ledit au moins un moyen de commutation (SAM) qui peut être commandé disposé entre ladite au moins une soupape (VEN) et ledit au moins un amortisseur pneumatique (LUF) ou ledit au moins un moyen de commutation (SAM' ') qui peut être commandé disposé entre ladite au moins une soupape (VEN) et ladite au moins une source de pression (DRU), de même que ledit au moins un moyen de commutation supplémentaire (SAM') peut, respectivement peuvent être commandé(s) par voie électrique et/ou par voie électronique.

3. Véhicule ferroviaire selon la revendication 2, **caractérisé en ce que** ledit au moins un moyen de commutation (SAM) qui peut être commandé disposé entre ladite au moins une soupape (VEN) et ledit au moins un amortisseur pneumatique (LUF) ou ledit au moins un moyen de commutation (SAM' ') qui peut être commandé disposé entre ladite au moins une soupape (VEN) et ladite au moins une source de pression (DRU), de même que ledit au moins un moyen de commutation supplémentaire (SAM') peut faire l'objet d'une commutation via un signal d'ouverture de portière.

4. Véhicule ferroviaire selon l'une quelconque des revendications 1 à 3, **caractérisé en ce que** ledit au moins un moyen de commutation (SAM) qui peut être commandé disposé entre ladite au moins une soupape (VEN) et ledit au moins un amortisseur pneumatique (LUF) ou ledit au moins un moyen de commutation (SAM'') qui peut être commandé disposé entre ladite au moins une soupape (VEN) et ladite au moins une source de pression (DRU), de même que ledit au moins un moyen de commutation supplémentaire (SAM') peut, respectivement peuvent faire l'objet d'une commutation via un signal déclenché lors d'un dépassement vers le haut ou vers le bas d'une vitesse limite de déplacement du véhicule ferroviaire (SCH) .

5. Véhicule ferroviaire selon l'une quelconque des revendications 1 à 4, **caractérisé en ce qu'**on prévoit un commutateur de fin de course qui met hors tension ledit au moins un moyen de commutation (SAM) qui peut être commandé disposé entre ladite au moins une soupape (VEN) et ledit au moins un amortisseur pneumatique (LUF) ou ledit au moins un moyen de commutation (SAM") qui peut être commandé disposé entre ladite au moins une soupape (VEN) et ladite au moins une source de pression (DRU), de même que ledit au moins un moyen de commutation supplémentaire (SAM') avant d'atteindre une position supérieure ou inférieure extrême de l'assiette du véhicule.

6. Véhicule ferroviaire selon l'une quelconque des revendications 1 à 5, **caractérisé en ce qu'**on prévoit un capteur pour la surveillance des positions extrêmes de l'amortisseur pneumatique (LUF) et/ou de ladite au moins une soupape (VEN) qui peut être activée par voie mécanique, qui est relié par voie électronique audit au moins un moyen de commutation (SAM) qui peut être commandé disposé entre ladite au moins une soupape (VEN) et ledit au moins un amortisseur pneumatique (LUF) ou audit au moins un moyen de commutation (SAM'') qui peut être commandé disposé entre ladite au moins une soupape (VEN) et ladite au moins une source de pression (DRU) et audit au moins un moyen de commutation supplémentaire (SAM'), dans lequel le moyen de commutation (SAM) qui peut être commandé, respectivement les moyens de commutation (SAM', SAM") qui peuvent être commandés, est, respectivement sont mis hors tension avant d'atteindre une position supérieure ou inférieure extrême de l'assiette du véhicule.
